# EUROPÄISCHE PATENTSCHRIFT

(11) **EP 3 126 715 B1**
(45) Veröffentlichungstag und Bekanntmachung des Hinweises auf die Patenterteilung: **19.05.2021**
(21) Anmeldenummer: 15713187.1
(22) Anmeldetag: 27.03.2015
(51) Int. Cl.: F16H 61/688, F16H 3/00

(54) **VERFAHREN ZUR SCHALTUNG EINES KRAFTFAHRZEUGGETRIEBES**
METHOD FOR SHIFTING GEARS IN A MOTOR VEHICLE TRANSMISSION
PROCÉDÉ PERMETTANT DE PASSER LES VITESSES DE LA BOÎTE DE VITESSES D'UN VÉHICULE AUTOMOBILE

(30) Priorität: 01.04.2014 DE 102014206149
(43) Veröffentlichungstag der Anmeldung: 08.02.2017
(73) Patentinhaber: Volkswagen Aktiengesellschaft, 38440 Wolfsburg (DE)
(72) Erfinder: GRÜNEWALD, Johannes, 38170 Schöppenstedt (DE); FELDHAUS, Romina, 49740 Flechum (DE); BOTHE, Edgar, 31228 Peine (DE)
(86) Internationale Anmeldenummer: PCT/EP2015/056721
(87) Internationale Veröffentlichungsnummer: WO 2015/150258

(56) Entgegenhaltungen:
- EP-A2- 2 693 080
- CN-A- 103 671 750
- DE-A1-102012 217 005

## Beschreibung

Die Erfindung betrifft ein Verfahren zur Schaltung eines Kraftfahrzeuggetriebes nach dem Oberbegriff des Patentanspruches 1.

Das Kraftfahrzeuggetriebe kann insbesondere als Doppelkupplungsgetriebe ausgestaltet sein, wobei mit dem Doppelkupplungsgetriebe mehrere Vorwärtsgänge schaltbar sind. Während der Schaltung des Kraftfahrzeuggetriebes wird ein Ist-Gang ausgelegt. Das Kraftfahrzeuggetriebe ist nun derart ausgestaltet, so dass dem Ist-Gang mehrere Schaltelemente zugeordnet sind. Solche Kraftfahrzeuggetriebe sind insbesondere in Form von Windungsgetrieben bekannt. Die Schaltelemente wirken mit entsprechenden Losrädern oder Loswellen zusammen. Mindestens einer der Vorwärtsgänge ist dabei vorzugsweise als Windungsgang ausgebildet. Das entsprechende Doppelkupplungsgetriebe kann dabei eine erste Getriebeeingangswelle und eine zweite Getriebeeingangswelle sowie zwei Triebwellen, mehrere Zahnräder und mehrere Schaltelemente insbesondere in Form von Synchronisiervorrichtungen aufweisen. Die erste Getriebeeingangswelle ist über eine erste Reibkupplung und die zweite Getriebeeingangswelle ist über eine zweite Reibkupplung mit einem Antriebsmotor verbindbar oder verbunden. Die Zahnräder sind derart kämmend angeordnet, dass mehrere Vorwärtsgänge mittels der Schaltelemente schaltbar sind. Ein Leistungsfluss des Windungsganges windet sich dabei über mehrere Zahnradstufen. Zur Schaltung der entsprechenden Losräder oder Loswellen sind nun entsprechende Schaltelemente vorgesehen. Insbesondere wenn der Ist-Gang als Windungsgang ausgebildet sind, müssen beim Auslegen mehrere Schaltelemente betätigt werden.

Aus der WO 2012/055 382 A1 ist ein Doppelkupplungsgetriebe für Front-Queranwendungen bekannt. Es sind zwei Reibkupplungen, zwei Getriebeeingangswellen und zwei Triebwellen vorgesehen. Auf der zweiten, äußeren Getriebeeingangswelle ist eine weitere Welle derart angeordnet, dass sich die beiden Getriebeeingangswellen und diese weitere Welle koaxial zueinander erstrecken. Die weitere Welle lässt sich über ein Schaltelement drehfest mit der äußeren Getriebeeingangswelle verbinden. Diese weitere Welle ist daher als Loswelle ausgebildet. Auf der weiteren Welle sind zwei Festräder angeordnet. Die innere und die äußere Getriebeeingangswelle verfügen zudem über jeweils ein Festrad. Hierdurch ergeben sich insgesamt vier Radebenen, die als Doppelradebenen ausgebildet sind und mit entsprechenden, den Triebwellen zugeordneten Zahnrädern kämmen. Auf einer der Triebwellen ist dabei eine Hohlwelle gelagert, wobei die Hohlwelle über ein Schaltelement mit der Triebwelle drehfest verbindbar ist. Auf der Hohlwelle ist ein Festrad und ein Losrad angeordnet. Bei diesem Doppelkupplungsgetriebe sind mehrere Windungsgänge realisierbar, wobei sich acht beziehungsweise neun lastschaltbare Vorwärtsgänge realisieren lassen. Die Stufensprünge der Übersetzung der ersten sechs Vorwärtsgänge sind dabei abnehmend. Der ersten Triebwelle sind dabei vier Losräder zugeordnet. Diese vier Losräder sind mit entsprechend vier Schaltelementen in Form von zwei doppelt wirkenden Synchronisiervorrichtungen realisiert. Der anderen Triebwelle sind ebenfalls vier Losräder zugeordnet, wobei diese Losräder ebenfalls mit vier, weiteren Schaltelementen in Form von zwei doppelt wirkenden Synchronisiervorrichtungen betätigbar sind. Die Synchronisiervorrichtungen bilden beidseitig wirkende Schaltelementeinheiten. Die Schaltelemente sind als nichtlastschaltbare Formschlusselemente ausgeführt. Je nachdem welcher Ist-Gang eingelegt ist, sind zwischen ein und drei Schaltelemente eingelegt.

Aus der DE 103 22 619 A1 ist ein automatisiertes Kraftfahrzeuggetriebe und ein Verfahren zur Schaltung des Kraftfahrzeuggetriebes bekannt. Das Kraftfahrzeuggetriebe ist als automatisiertes Schaltgetriebe ausgebildet. Es sind mehrere Schaltstufen mit jeweils einem treibendem Zahnrad und einem getriebenen Zahnrad vorgesehen. Eines dieser Zahnräder ist als Losrad ausgebildet und entsprechend drehbeweglich auf einer Welle gelagert. Dieses Losrad kann mittels eines Schaltelementes drehfest mit der Welle gekoppelt werden. Es ist dabei jeweils eine Synchronisationsvorrichtung vorgesehen, die beim Schalten eine Drehzahlanpassung des jeweiligen Losrades an die Welle bewirkt. Diese Synchronisationseinrichtungen sind so ausgestaltet, dass das automatisierte Schaltgetriebe während des gesamten Schaltvorganges ohne Zugkraftunterbrechung geschaltet wird. Bei diesem automatisierten Schaltgetriebe übertragen während des Schaltens zwischen unterschiedlichen Gängen zumindest zeitweise zwei Synchronisationseinrichtungen, die verschiedenen Schaltstufen zugeordnet sind, gleichzeitig jeweils ein Synchrondrehmoment. Entsprechende Stelleinrichtungen ermöglichen dabei eine Stellbewegungen in einen Zustand, in dem zwei unterschiedliche Gänge bzw. Schaltstufen gleichzeitig ein Drehmoment übertragen.

Die gattungsbildende DE 10 2012 217 005 A1 betrifft ein Getriebe, insbesondere ein Doppelkupplungsgetriebe, mit einer Eingangswellenachse, mit einer auf der Eingangswellenachse angeordneten ersten Eingangswelle, mit einer auf der Eingangswellenachse angeordneten, zweiten Eingangswelle, mit einer von der Eingangswellenachse beabstandeten Vorgelegewellenachse, mit einer auf der Vorgelegewellenachse angeordneten Vorgelegewelle, wobei die erste Eingangswelle und/oder die zweite Eingangswelle zur Darstellung von Übersetzungen mittels Vorgelegezahnradstufen, die mittels Schalteinrichtungen in einen Leistungsfluss zuschaltbar und von einem Leistungsfluss abschaltbar sind, mit der Vorgelegewelle verbindbar sind, mit einer Ausgangswellenachse und mit einer auf der Ausgangswellenachse angeordneten Ausgangswelle. Ferner kann ein Wechsel einer Übersetzung durch Betätigung mehrere Schalteinrichtung erfolgen, insbesondere können die Schalteinrichtungen bei einem Wechsel einer Übersetzung gleichzeitig betätigbar seien.

Ähnlich offenbaren die CN 103 671 750 A und EP 2 693 080 A2 ein Doppelkupplungsgetriebe, wo auch beim Wechsel der Übersetzung mehrere Schalteinrichtung gleichzeitig betätigt werden.

Aus der DE 10 2011 050 083 A1 ist ein Kraftfahrzeuggetriebe und ein Verfahren zur Schaltung des Kraftfahrzeuggetriebes bekannt. Das Kraftfahrzeuggetriebe weist zwei Getriebeeingangswellen und zwei Triebwellen auf. Die äußere erste Getriebeeingangswelle weist drei Festräder auf. Die innere Getriebeeingangswelle weist ebenfalls drei Festräder auf. Diese Festräder kämmen jeweils mit entsprechenden Losrädern oder Loswellen auf den entsprechenden Triebwellen. Der ersten Triebwelle sind dabei drei Losräder sowie eine Loswelle und der zweiten Triebwelle sind ebenfalls drei Losräder und eine Loswelle zugeordnet, wobei diese Losräder beziehungsweise Loswellen mit jeweils vier Schaltelementen in Form von beidseitig wirkenden Schaltelementeinheiten betätigbar sind. Zwei endseitige, der inneren, zweiten Getriebeeingangswelle zugeordnete Zahnradstufen sind dabei als Doppelradebenen ausgebildet. Die vierte Gangstufe ist als Windungsgang ausgebildet. Wenn die vierte Gangstufe als Ist-Gang eingelegt ist, so sind auf der ersten Triebwelle die Loswelle und eines der Losräder mittels eines Schaltelementes miteinander gekoppelt. Dieses Losrad ist dabei Teil der Doppelradebene, so dass ein weiteres Losrad, nämlich das der fünften Gangstufe auf der anderen, zweiten Triebwelle ebenfalls angetrieben wird. Dieses der fünften Gangstufe zugeordnete Losrad ist nun über ein weiteres Schaltelement mit der anderen, zweiten Triebwelle gekoppelt. Eine zehnte Gangstufe ist ebenfalls als Windungsgang ausgebildet, wobei, wenn diese zehnte Gangstufe eingelegt ist, ebenfalls zwei Schaltelemente geschlossen sind beziehungsweise betätigt sind, um den entsprechenden Windungsgang zu realisieren.

Das Verfahren ist noch nicht optimal ausgebildet. Bei den bisherigen Kraftfahrzeuggetrieben, insbesondere den bekannten Doppelkupplungsgetrieben und den entsprechenden Verfahren zur Schaltung eines entsprechenden Doppelkupplungsgetriebes besteht der Gangwechsel aus einem Gangauslegevorgang und einem Gangeinlegevorgang sowie einer nachfolgenden Drehzahlanpassung des Verbrennungsmotors. Nach dem Gangeinlegevorgang ist auf dem inaktiven Teilgetriebe eine Verbindung zwischen der entsprechenden Triebwelle und der entsprechenden Getriebeeingangswelle mit neuer Übersetzung eingestellt. Dabei wird beim Gangeinlegevorgang die anfangs am Schaltelement auftretende Drehzahldifferenz gegen Null synchronisiert. Wenn der neue Gang eingelegt ist, ist jeweils das entsprechende Losrad drehfest mit der Triebwelle verbunden. Beim Gangauslegen wird das entsprechende Schaltelement geöffnet, so dass das Losrad nun nicht mehr drehfest mit der Triebwelle verbunden ist. Nun wird ein anderes Losrad auf einer der Triebwellen mittels eines weiteren Schaltelementes drehfest gekoppelt. Insbesondere bei der Aktivierung von den Windungsgängen sind je nach Getriebestruktur mehrere Betätigungen von Schaltelementen im Rahmen der Gangaus- und Einlegevorgänge notwendig. Dies kann einerseits sehr zeitaufwendig sein, andererseits ist der damit verbundene schaltungstechnische Aufwand bzw. dessen Steuerung teilweise aufwändig.

Der Erfindung liegt die Aufgabe zugrunde, das Verfahren zur Schaltung eines Kraftfahrzeuggetriebes zu verbessern.

Diese der Erfindung zugrunde liegende Aufgabe wird nun durch ein Verfahren mit den Merkmalen des Patentanspruches 1.

Das erfindungsgemäße Verfahren hat unter anderem den Vorteil, dass der Schaltvorgang beschleunigt werden kann, indem beim Auslegen des Ist-Ganges die nicht mehr benötigten Schaltelemente zumindest teilweise gleichzeitig betätigt, insbesondere ausgerückt werden. Es wird vorgeschlagen, das Gangauslegen unter Verwendung mehrere Schaltelemente zeitlich parallel vorzunehmen. Entsprechende Schaltelemente können auch als "Gangsteller" bezeichnet werden und insbesondere als Synchronisiervorrichtungen ausgestaltet sein. Die entsprechenden Schaltelemente können beispielsweise dabei zwei miteinander im kämmenden Eingriff stehenden Losrädern zugeordnet sein, so dass das eine Losrad mit einer der Getriebeeingangswellen und das andere Losrad mit einer der Triebwellen drehfest über das jeweilige entsprechende Schaltelement verbunden ist, wenn der Ist-Gang eingelegt ist. Wenn nun der Ist-Gang ausgelegt wird, so werden die entsprechenden Schaltelemente nun gleichzeitig betätigt. Ferner ist das Verfahren auch besonders vorteilhaft beim Gangeinlegen des Zielganges, wenn zum Einlegen des Zielganges insbesondere ebenfalls mehrere Schaltelemente betätigt werden müssen. Wenn nun ein Zielgang, insbesondere ein Windungsgang eingelegt wird, können beim Einlegen des Zielganges mehrere Schaltelemente zu betätigen sein. In einem ersten Schritt wird mindestens ein "lastfreies" Bauteil, nämlich ein bislang nicht in einen Leistungsfluss eingebundenes Losrad oder eine bislang nicht in einem Leistungsfluss eingebundene Loswelle, das/die dem Zielgang zugeordnet ist, über das zugehörige Schaltelement mit einer Getriebeeingangswelle oder einer Triebwelle gekoppelt. In einem zweiten Schritt wird ein verbleibendes Schaltelement eingelegt, um dann funktional wirksam eine Verbindung zwischen der Getriebeeingangswelle und der Triebwelle bereitzustellen. Das Gangeinlegen unter Verwendung von zwei Schaltelementen erfolgt daher insbesondere sequentiell in zwei Schritten nacheinander. In besonders bevorzugter Ausgestaltung koppelt zunächst in einem ersten Schritt eines der Schaltelemente zunächst entsprechende lastfreie Bauteile - nämlich insbesondere Losräder oder Loswellen - vzw. mit geringer Massenträgheit an die entsprechende Triebwelle oder die entsprechende Getriebeeingangswelle an. Hierdurch sind diese freien Bauteile dabei über die Triebwelle an das entsprechende Rad des Kraftfahrzeuges beziehungsweise über die Getriebeeingangswelle an die entsprechende zugehörige Reibkupplung angekoppelt. Das Einlegen erfolgt dabei in besonders bevorzugter Ausgestaltung gesteuert, insbesondere mit Vorgabe von Druck- und Volumenstrom ohne Berücksichtigung der Drehzahl der anzukoppelnden lastfreien Bauteile. In einem zweiten Schritt wird dann durch Betätigung eines weiteren Schaltelements, das ebenfalls dem Zielgang zugeordnet ist, eine Wirkverbindung zwischen dem Rad und der zugehörigen Reibkupplung hergestellt. Mit dem Begriff "lastfrei" ist also insbesondere gemeint, dass das jeweilige "lastfreie Bauteil" nicht in einer Wirkverbindung mit der Reibkupplung oder dem Radabtrieb beispielsweise einem Differenzial steht, sondern im wesentlichen daher "lastfrei" drehen/rotieren kann. In dem zweiten Schritt wird insbesondere dann eine Wirkverbindung zwischen der entsprechenden Triebwelle und der entsprechenden Getriebeeingangswelle hergestellt. Die bei diesem zweiten Schritt dabei anfangs auftretende Drehzahldifferenz wird vorzugsweise durch Drehzahlanpassung mittels des zugeordneten Schaltelements geregelt und insbesondere auf Null synchronisiert. Dies entspricht einer Soll-Gradientenregelung in Synchronpunkt. Das Gangeinlegen mit drei oder mehr Schaltelementen kann insbesondere auch teilweise parallel erfolgen, wodurch Zeit beim Gangeinlegen gespart werden kann. Die eingangs genannten Nachteile sind daher vermieden und entsprechende Vorteile sind erzielt.

Es gibt nun eine Vielzahl von Möglichkeiten, das eingangs genannte Verfahren auszugestalten und weiterzubilden. Hierfür darf zunächst auf die dem Patentanspruch 1 nachgeordneten Patentansprüche verwiesen werden. Im Folgenden wird nun eine bevorzugte Ausgestaltung eines Doppelkupplungsgetriebes zur Durchführung des Verfahrens anhand der Zeichnung und der dazugehörigen Beschreibung näher erläutert. In der Zeichnung zeigt:
- Fig. 1: in einer schematischen Darstellung ein Doppelkupplungsgetriebe, und
- Fig. 2: in einer Tabelle ein Schaltschema des Doppelkupplungsgetriebes.

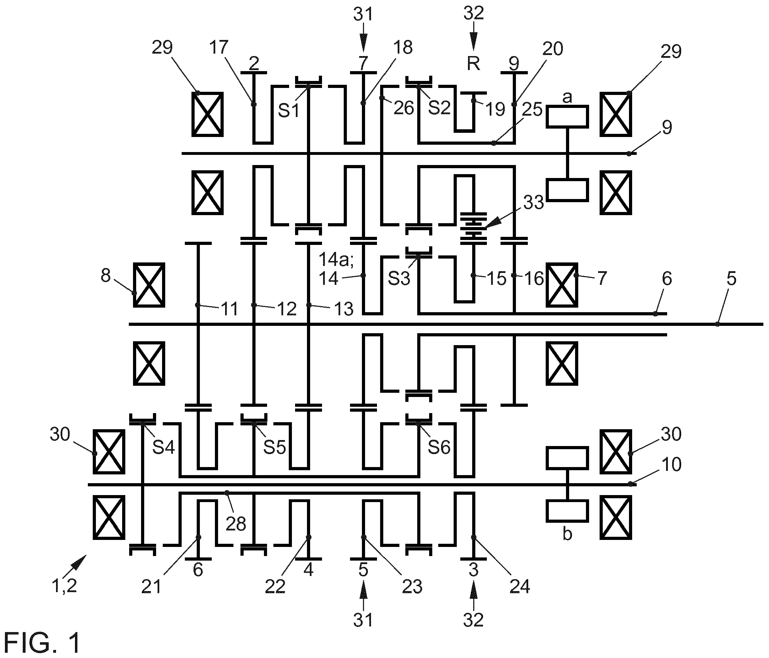

Die Erfindung betrifft ein Verfahren zur Schaltung eines Kraftfahrzeuggetriebes 2, wobei ein Ist-Gang ausgelegt wird. In Fig. 1 ist ein Kraftfahrzeuggetriebe 2 in Form eines Doppelkupplungsgetriebes 1 für ein nicht dargestelltes Kraftfahrzeug gut zu erkennen. Bevor die Einzelheiten des Verfahrens näher erläutert werden, darf zunächst auf die bevorzugte Ausgestaltung des Kraftfahrzeuggetriebes 2, nämlich auf das Doppelkupplungsgetriebe 1 näher eingegangen werden:
Das Doppelkupplungsgetriebe 1 weist eine erste Getriebeeingangswelle 5 und eine zweite Getriebeeingangswelle 6 auf. Die beiden Getriebeeingangswellen 5, 6 sind koaxial zueinander angeordnet. Die zweite Getriebeeingangswelle 6 ist als Hohlwelle ausgebildet, wobei die erste Getriebeeingangswelle 5 die zweite Getriebeeingangswelle 6 entsprechend durchgreift. Die erste Getriebeeingangswelle 5 kann insbesondere als Vollwelle ausgebildet sein. Es ist jedoch auch denkbar, dass die erste Getriebeeingangswelle 5 ebenfalls als Hohlwelle ausgebildet ist. Die zweite Getriebeeingangswelle 6 ist mit einem Lager 7 an ihrem nicht näher bezeichneten Außenumfang gelagert. Die erste Getriebeeingangswelle 5 ist an ihrem kupplungsfernen Ende mittels eines Lagers 8 gelagert. Die erste Getriebeeingangswelle 5 ist über eine erste Reibkupplung (nicht dargestellt) und die zweite Getriebeeingangswelle 6 ist über eine zweite Reibkupplung (nicht dargestellt) mit einem Antriebsmotor (nicht dargestellt) verbindbar oder verbunden. Je nach Schalten der Reibkupplungen kann so das Antriebsmoment auf die erste Getriebeeingangswelle 5 oder auf die zweite Getriebeeingangswelle 6 übertragen werden.

Das Doppelkupplungsgetriebe 1 weist jeweils zwei Triebwellen 9, 10 auf. Das Doppelkupplungsgetriebe 1 weist nun jeweils mehrere Zahnräder auf, die insbesondere die Triebwellen 9, 10 mit der entsprechenden Getriebeeingangswelle 5, 6 in Form von Zahnradpaarungen verbinden. Die Zahnräder 11, 12, 13 sind als Festräder ausgebildet und der inneren, ersten Getriebeeingangswelle 5 zugeordnet. Die Zahnräder 11, 12, 13 sind drehfest auf der Getriebeeingangswelle 5 angeordnet beziehungsweise ausgebildet.

Der zweiten Getriebeeingangswelle 6 sind ebenfalls drei Zahnräder, nämlich die Zahnräder 14, 15, 16 zugeordnet. Das kupplungsnahe, in Fig. 1 rechts dargestellte Zahnrad 16 ist als Festrad ausgebildet. Das mittlere, der zweiten Getriebeeingangswelle 6 zugeordnete Zahnrad 15 ist als Losrad (nicht näher bezeichnet) ausgebildet. Dieses Losrad "15" beziehungsweise Zahnrad 15 ist dabei auf der zweiten Getriebeeingangswelle 6 angeordnet. Das kupplungsferne, in Fig. 1 links dargestellte Zahnrad 14 ist vorzugsweise als Losrad 14a ausgebildet und dabei auf der inneren, ersten Getriebeeingangswelle 5 angeordnet. Dieses Losrad 14a ist der zweiten, äußeren Getriebeeingangswelle 6 zugeordnet, da es über ein Schaltelement S3 drehfest mit der äußeren Getriebeeingangswelle 6 verbindbar ist.

Die Triebwelle 9 weist die Zahnräder 17, 18, 19 und 20 auf, die "lose" der Triebwelle 9 zugeordnet, also als Losräder ausgebildet sind. Die Zahnräder 17, 18, 20 sind mittels der beiden Schaltelemente S1, S2 drehfest mit der Triebwelle 9 verbindbar. Das erste, kupplungsferne Zahnrad 17 kämmt dabei mit dem als Festrad ausgebildeten, mittleren, der ersten Getriebeeingangswelle 5 zugeordneten Zahnrad 12. Zwischen den beiden benachbarten Zahnrädern 17, 18 ist in der Ebene des Zahnrades 13 das Schaltelement S1 auf der ersten Triebwelle 9 angeordnet. Das Schaltelement S1 ist doppelt wirkend ausgebildet. Das Zahnrad 18 ist ebenfalls als Losrad ausgebildet und über das Schaltelement S1 mit der ersten Triebwelle 9 verbindbar.

Es ist im Wesentlichen neben dem Zahnrad 18 das Schaltelement S2 in der Ebene des Schaltelements S3 angeordnet. Das Zahnrad 20 kämmt mit dem als Festrad ausgebildeten, kupplungsnahen, der zweiten Getriebeeingangswelle 6 zugeordneten Zahnrad 16.

Das kupplungsnahe Zahnrad 20 weist einen Hohlwellenabschnitt 25 auf, wobei der Hohlwellenabschnitt 25 das Zahnrad 20 mit dem Schaltelement S2 verbindet. Zwischen dem Schaltelement S2 und dem Zahnrad 20 auf dem Hohlwellenabschnitt 25 ist das Zahnrad 19 lose angeordnet. Auf der ersten Triebwelle 9 ist ferner ein drehfest angeordneter Kupplungskörper 26 vorgesehen, wobei der Kupplungskörper 26 durch Betätigung des doppelt wirkenden Schaltelements S2 in eine Richtung drehfest mit dem Hohlwellenabschnitt 25 und damit mit dem Zahnrad 20 verbindbar ist. Auf der ersten Triebwelle 9 ist ein Abtriebsritzel a drehfest angeordnet. Das Abtriebsritzel a ist nah zum Zahnrad 20 angeordnet.

Auf der zweiten Triebwelle 10 sind vier Zahnräder 21 bis 24 angeordnet. Kupplungsfern ist ein Schaltelement S4, im Wesentlichen in der Ebene des kupplungsfernen Lagers 8 der ersten Getriebeeingangswelle 5 angeordnet. Die Zahnräder 21, 22, 23, 24 sind durch Betätigung der Schaltelemente S4, S5 und S6 drehfest miteinander beziehungsweise drehfest mit der zweiten Triebwelle 10 verbindbar, wie im Folgenden beschrieben:
Auf der Triebwelle 10 ist eine Hohlwelle 28 angeordnet. Die Hohlwelle 28 trägt die Zahnräder 21, 22, 23 sowie die beiden Schaltelemente S5 und S6. Das Zahnrad 24 ist dabei neben der Hohlwelle 28, nämlich kupplungsnah neben der Hohlwelle 28 lose auf der Triebwelle 10 angeordnet. Denkbar ist auch, dass die Hohlwelle 28 verlängert ausgebildet ist und das Zahnrad 24 lose auf dem Endbereich der Hohlwelle 28 drehbar gelagert ist. Das als Losrad ausgebildete Zahnrad 24 ist mit dem Schaltelement S6 drehfest mit der Hohlwelle 28 verbindbar.

Durch Betätigen des Schaltelements S5 ist wahlweise entweder das Zahnrad 21 oder das Zahnrad 22 drehfest mit der Hohlwelle 28 verbindbar. Das Zahnrad 23 ist durch Betätigen des Schaltelements S6 drehfest mit der Hohlwelle 28 verbindbar. Der zweiten Triebwelle 10 ist ferner ein Abtriebsritzel b zugeordnet. Die erste Triebwelle 9 ist durch zwei Lager 29 gelagert und die zweite Triebwelle 10 ist durch zwei Lager 30 gelagert.

Die Zahnräder 11 bis 24 sind nun derart kämmend angeordnet, dass mehrere Vorwärtsgänge mittels der Schaltelemente S1 bis S6 schaltbar sind. Mindestens einer der Vorwärtsgänge ist als Windungsgang ausgebildet. Ein Leistungsfluss des Windungsganges windet sich über mehrere Zahnradstufen. Jeweils zwei kämmend angeordnete Zahnräder bilden eine Zahnradstufe. Die Zahnräder 11 und 21 sind kämmend angeordnet und bilden eine dem sechsten Vorwärtsgang zugeordnete Zahnradstufe. Die Zahnräder 12 und 17 sind kämmend angeordnet und bilden eine Zahnradstufe, die dem zweiten Vorwärtsgang zugeordnet ist. Die Zahnräder 13 und 22 sind kämmend angeordnet und bilden eine Zahnradstufe, die einem vierten Vorwärtsgang zugeordnet ist.

Die Zahnräder 14 und 23 sind kämmend zueinander angeordnet, wobei diese eine Zahnradstufe bilden, die einem fünften Vorwärtsgang zugeordnet ist. Das Zahnrad 14 bildet ferner mit dem Zahnrad 18 eine weitere Zahnradstufe. Diese Zahnradstufe ist einem siebten Vorwärtsgang zugeordnet.

Das Zahnrad 15 kämmt mit dem Zahnrad 24 und bildet eine Zahnradstufe, die dem dritten Vorwärtsgang zugeordnet ist.

Das Zahnrad 15 dient ferner zum Bereitstellen des Antriebselementes für den Rückwärtsgang. Für den Rückwärtsgang ist das Zahnrad 19 jeweils beteiligt. Es ist ein Zwischenrad 33 vorgesehen, das im kämmenden Eingriff mit dem Zahnrad 15 und dem Zahnrad 19 steht. Es ist eine Zahnradstufe für einen neunten Vorwärtsgang durch die beiden Zahnräder 16 und 20 gebildet.

Es ist vorteilhaft, dass mindestens eine der Doppelradebenen 31 bzw. 32 drei einzelne Losräder 14, 18, 23 bzw. 15, 19, 24 aufweist, wobei eines dieser Losräder 14, 15 einer der Getriebeeingangswellen 5, 6, insbesondere der zweiten Getriebeeingangswelle 6 zugeordnet ist und die beiden anderen Losräder 18, 23; 19, 24 jeweils einer der beiden Triebwellen 9, 10 zugeordnet sind. Hierdurch ist ein kompakt bauendes Doppelkupplungsgetriebe 1 mit insgesamt zehn Vorwärtsgängen und vorzugsweise einer näherungsweise progressiven

Übersetzungsstufung bereitgestellt. Dieses Doppelkupplungsgetriebe 1 ist insbesondere für einen Front-Quereinbau in einem Kraftfahrzeug geeignet. Es sind insgesamt sechs Radebenen vorgesehen, wobei von diesen Radebenen zwei als Doppelradebenen 31, 32 ausgebildet sind. Hierdurch ist ein axial kurz bauendes Doppelkupplungsgetriebe 1 bereitgestellt.

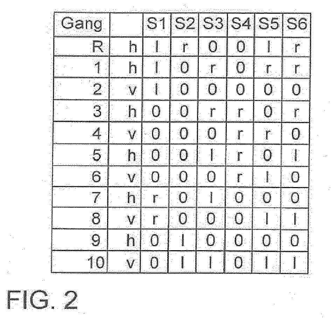

Im Folgenden dürfen nun die Schaltzustände des Doppelkupplungsgetriebes 1 anhand von der Fig. 2 näher erläutert werden: Die Schaltelemente S1 bis S6 weisen eine in Fig. 1 linke Schaltstellung, eine rechte Schaltstellung und eine Neutralstellung auf. In der Tabelle der Fig. 2 ist die linke, kupplungsferne Schaltstellung jeweils durch ein "I" und die rechte, kupplungsnahe Schaltstellung durch ein "r" gekennzeichnet. Die Neutralstellung ist durch eine "0" gekennzeichnet. Erfolgt der Antrieb über die äußere Getriebeeingangswelle 6, ist in der zweiten Spalte ein "h" angegeben. Erfolgt der Antrieb über die innere, erste Getriebeeingangswelle 5, ist in der zweiten Spalte ein "v" angegeben. Vorzugsweise sind benachbarte Vorwärtsgänge unterschiedlichen Getriebeeingangswellen 5, 6 zugeordnet, so dass die Vorwärtsgänge entsprechend schaltbar, insbesondere lastschaltbar sind.

Wenn der Rückwärtsgang eingelegt ist, wird das Antriebsmoment über die äußere Getriebeeingangswelle 6 übertragen. Das Schaltelement S1 ist kupplungsfern, das heißt nach links geschaltet und verbindet damit das Zahnrad 17 mit der ersten Triebwelle 9. Das Schaltelement S2 ist kupplungsnah (nach rechts) geschaltet und verbindet so das Zahnrad 19 mit dem Zahnrad 20. Das Schaltelement S5 ist kupplungsfern, nach links geschaltet, so dass die Hohlwelle 28 drehfest mit dem Zahnrad 21 verbunden ist. Das Antriebsmoment wird nun ausgehend von der äußeren Getriebeeingangswelle 6 zunächst auf das Zahnrad 16 und damit auf das kämmend dazu angeordnete Zahnrad 20 und damit auf die Zahnradstufe des Rückwärtsganges übertragen. Da das Schaltelement S2 geschlossen ist, wird das dem Rückwärtsgang zugeordnete Zahnrad 19 und damit auch das Zwischenrad 33 sowie das Losrad 15 auf der äußeren Getriebeeingangswelle 6 angetrieben. Ferner wird das ebenfalls zur Doppelradebene 32 zugehörige Zahnrad 24 auf der anderen, zweiten Triebwelle 10, und damit die Zahnradstufe des neunten Vorwärtsganges bzw. des dritten Vorwärtsganges angetrieben. Über das Schaltelement S6 ist das Zahnrad 24 drehfest mit der Hohlwelle 28 verbunden. Da auch das Zahnrad 21 mittels des Schaltelements S5 mit der Hohlwelle 28 verbunden ist, wird das Zahnrad 11 auf der ersten Getriebeeingangswelle 5 angetrieben. Das Zahnrad 12 der ersten Getriebeeingangswelle 5 treibt nun das Zahnrad 17 auf der ersten Triebwelle 9 an, wobei über das Schaltelement S1 das Antriebsmoment schließlich zum Abtriebsritzel a geleitet wird. Der Rückwärtsgang ist hier als Windungsgang ausgebildet, wobei der Leistungsfluss sich über die dem neunten, dritten, sechsten und zweiten Vorwärtsgang zugeordneten Zahnradstufen erstreckt. Alternativ kann der Rückwärtsgang dadurch realisiert sein, dass das Schaltelement S5 in der rechten Schaltstellung angeordnet wird, wobei der Leistungsfluss sich dabei über die dem neunten, dritten, vierten und zweiten Vorwärtsgang zugeordneten Zahnradstufen erstreckt. Vzw. kann das Doppelkupplungsgetriebe 1 dann auch mit zwei unterschiedlichen Rückwärtsgangstufen gemäß den beiden oben aufgeführten Alternativen ausgebildet sein bzw. diese beiden verschiedenen Rückwärtsgangstufen aufweisen.

Wenn der erste Vorwärtsgang eingelegt ist, wird das Antriebsmoment ebenfalls über die äußere Getriebeeingangswelle 6 eingeleitet. Das Schaltelement S1 ist in der linken, kupplungsfernen Schaltstellung, das Schaltelement S2 ist in der Neutralstellung und das Schaltelement S3 ist in der kupplungsnahen, rechten Schaltstellung angeordnet. Die Schaltelemente S5 und S6 befinden sich in der kupplungsnahen, rechten Schaltstellung. Hierdurch wird das Antriebsmoment von der äußeren Getriebeeingangswelle 6 über das Schaltelement S3 auf das Zahnrad 15, auf das Zahnrad 24 und über die Schaltelemente S6 und S5 (über die Hohlwelle 28) auf das Zahnrad 22 und damit auf die erste, innere Getriebeeingangswelle 5 übertragen. Das Schaltelement S1 überträgt ausgehend von dem Zahnrad 12 und 17 das Antriebsmoment auf die erste Triebwelle 9. Der erste Vorwärtsgang ist als Windungsgang ausgebildet. Der Leistungsfluss des ersten Vorwärtsgangs erstreckt sich über die Zahnradstufen des dritten, vierten und zweiten Vorwärtsganges.

Es ist denkbar, für den ersten Vorwärtsgang das Schaltelement S5 in der linken Schaltstellung anzuordnen. Der Leistungsfluss des ersten Vorwärtsgangs erstreckt sich dann über die Zahnradstufen des dritten, sechsten und zweiten Vorwärtsganges.

Wenn der zweite Vorwärtsgang eingelegt ist, wird das Antriebsmoment auf die erste Getriebeeingangswelle 5 übertragen. Das Schaltelemente S1 befindet sich in der linken, kupplungsfernen Schaltstellung und verbindet somit das Zahnrad 17 mit der ersten Triebwelle 9. Alle anderen Schaltelemente S2 bis S6 sind insbesondere in der Neutralstellung angeordnet. Ausgehend von der inneren Getriebeeingangswelle 5 wird das Antriebsmoment über das Zahnrad 12, das Zahnrad 17 auf die erste Triebwelle 9 und damit auf das Abtriebsritzel a übertragen. Der zweite Vorwärtsgang ist insbesondere nicht als Windungsgang ausgebildet.

Wenn der dritte Vorwärtsgang eingelegt ist, wird das Antriebsmoment über die äußere Getriebeeingangswelle 6 übertragen. Die Schaltelemente S1, S2 und S5 befinden sich in der Neutralstellung, die Schaltelemente S3 und S4 befinden sich in der rechten, kupplungsnahen Schaltstellung, wodurch das Zahnrad 15 mit der äußeren Getriebeeingangswelle 6 drehfest verbunden ist und die Hohlwelle 28 drehfest mit der Triebwelle 10 verbunden ist. Ferner befindet sich das Schaltelement S6 in der kupplungsnahen Schaltstellung. Hierdurch ist das Zahnrad 24 ebenfalls mit der Hohlwelle 28 verbunden. Das Antriebsmoment wird von der äußeren Getriebeeingangswelle 6 auf das Zahnrad 15, das Zahnrad 24, die Hohlwelle 28 bzw. das Schaltelement S4 und damit auf die zweite Triebwelle 10 mit dem Abtriebsritzel b übertragen.

Wenn der vierte Vorwärtsgang eingelegt ist, wird das Antriebsmoment über die innere Getriebeeingangswelle 5 übertragen. Die Schaltelemente S1, S2, S3, S6 befinden sich in der Neutralstellung und die Schaltelemente S4 und S5 befinden sich in der kupplungsnahen, rechten Schaltstellung. Hierdurch wird das Antriebsmoment über die Zahnräder 13, 22, die Hohlwelle 28 auf die Triebwelle 10 übertragen.

Wenn der fünfte Vorwärtsgang eingelegt ist, wird das Antriebsmoment über die äußere Antriebswelle 6 übertragen. Die Schaltelemente S1, S2, S5 befinden sich in der Neutralstellung. Die Schaltelemente S3 und S6 befinden sich in der linken, kupplungsfernen Schaltstellung und das Schaltelement S4 befindet sich in der rechten, kupplungsnahen Schaltstellung. Hierdurch wird das Antriebsmoment auf das Zahnrad 14, das Zahnrad 23, die Hohlwelle 28, das Schaltelement S4 und damit die Triebwelle 10 übertragen.

Wenn der sechste Vorwärtsgang eingelegt ist, befindet sich das Schaltelement S4 in der rechten Schaltstellung und das Schaltelement S5 in der linken Schaltstellung. Hierdurch wird das Antriebsmoment von der inneren Getriebeeingangswelle 5 auf das Zahnrad 11 und 21, die Hohlwelle 28 und auf die Triebwelle 10 übertragen.

Wenn der siebte Vorwärtsgang eingelegt ist, wird das Antriebsmoment auf die äußere Antriebswelle 6 übertragen. Das Schaltelement S1 ist in der rechten Schaltstellung angeordnet und die Schaltelemente S2, S4, S5, S6 befinden sich in der Neutralstellung. Das Schaltelement S3 befindet sich in der linken Schaltstellung. Hierdurch wird das Antriebsmoment von der Getriebeeingangswelle 6 auf das Zahnrad 14, das Zahnrad 18 und von da aus auf die Triebwelle 9 übertragen.

Wenn nun der achte Vorwärtsgang eingelegt ist, wird das Antriebsmoment über die innere Getriebeeingangswelle 5 übertragen. Das Schaltelement S1 befindet sich in der rechten Schaltstellung und das Schaltelement S2 bis S4 befinden sich in der Neutralstellung und die Schaltelemente S5, S6 sind in der linken Schaltstellung angeordnet. Hierdurch wird das Antriebsmoment von der inneren Antriebswelle auf die Hohlwelle 28 und von da aus auf die Doppelradebene 31 mit dem Zahnrad 18 und von da aus auf die erste Triebwelle 9 übertragen. Der achte Vorwärtsgang ist als Windungsgang ausgebildet. Der Leistungsfluss des achten Vorwärtsganges erstreckt sich über die Zahnradstufen des sechsten, fünften und siebten Vorwärtsgangs.

Zur Schaltung des neunten Vorwärtsganges ist das Schaltelement S2 in der linken Schaltstellung angeordnet. Alle anderen Schaltelemente S1, S3 bis S6 befinden sich in der Neutralstellung. Das Antriebsmoment wird von der äußeren Getriebeeingangswelle 6 auf das Zahnrad 16 und das Zahnrad 20 und von da aus über das Schaltelement S2 auf die erste Triebwelle 9 übertragen.

Wenn der zehnte Vorwärtsgang eingelegt ist, sind die Schaltelemente S2, S3, S5 und S6 in der linken Schaltstellung angeordnet und die anderen beiden Schaltelemente S1 und S4 sind in der Neutralstellung angeordnet. Das Antriebsmoment wird von der inneren Getriebeeingangswelle 5 über das Zahnrad 11 und das Zahnrad 21 auf die Hohlwelle 28 übertragen. Die Hohlwelle 28 treibt über das Schaltelement S6 das Zahnrad 23 und damit das Zahnrad 14 der Doppelradebene 31 an. Über das Schaltelement S3 wird schließlich das Zahnrad 16 und damit die zweite, äußere Getriebeeingangswelle 6 angetrieben, wodurch das Zahnrad 20 und damit der Hohlwellenabschnitt 25 angetrieben wird. Da das Schaltelement S2 geschlossen ist, wird schließlich die Triebwelle 9 angetrieben. Der Leistungsfluss des zehnten Vorwärtsgangs erstreckt sich über die Zahnradstufen des sechsten, fünften und neunten Vorwärtsgangs.

Es ist denkbar, für den zehnten Vorwärtsgang die Schaltelemente S3, S5 und S6 in der rechten Schaltstellung anzuordnen. Der Leistungsfluss erstreckt sich dann über die Zahnradstufen des vierten, dritten und neunten Vorwärtsganges.

Wie vorstehend beschrieben und in Fig. 2 gut ersichtlich ist, sind jeweils mehrere der Schaltelemente S1 bis S6 betätigt, d.h. in der "I"-oder "r"-Stellung, wenn einer der Vorwärtsgänge 1, 3 bis 8 und 10 eingelegt ist.

Wenn einer dieser Gänge nun als Ist-Gang eingelegt ist, so werden gegebenenfalls mehrere der Schaltelemente S1 bis S6 auszulegen sein.

Das erfindungsgemäße Verfahren hat nun den Vorteil, dass der Schaltvorgang beschleunigt werden kann, indem beim Auslegen des Ist-Ganges die nicht mehr benötigten Schaltelemente S1 bis S6 zumindest teilweise gleichzeitig betätigt werden.

Dies darf anhand einer Rückschaltung von der fünften Gangstufe - dem, dann eingelegten Ist-Gang- in die dritte Gangstufe -dem Zielgang- nun näher erläutert werden:
Wenn nun als Ist-Gang bspw. der fünfte Gang eingelegt ist, so sind die Schaltelemente S3, S4 und S6 entsprechend betätigt: das Schaltelement S3 ist in der linken Stellung, das Schaltelement S4 ist in der rechten Stellung, und das Schaltelement S6 ist in der linken Stellung angeordnet.

Wenn nun dieser Ist-Gang ausgelegt wird, so werden die entsprechenden Schaltelemente S3 und S6 gleichzeitig betätigt. Das Schaltelement S4 ist auch im Zielgang, nämlich in der dritten Gangstufe in derselben Stellung "rechts" angeordnet und muss daher nicht ausgelegt werden.

Zum Einlegen des Zielganges / des dritten Gangs werden nun die beiden anderen Schaltelemente S3 und S6 entsprechend betätigt, nämlich in die Schaltstellung "rechts" bewegt. Das Gangeinlegen unter Verwendung von zwei Schaltelementen - hier S3 und S6 - erfolgt insbesondere sequentiell in zwei Schritten nacheinander.

In besonders bevorzugter Ausgestaltung koppelt zunächst in einem ersten Schritt eines der Schaltelemente zunächst entsprechende freie Bauteile - nämlich Losräder oder Loswellen - mit geringer Massenträgheit an die entsprechende Triebwelle 9, 10 oder die entsprechende Getriebeeingangswelle 5, 6 an. Hierdurch sind diese lastfreien Bauteile dabei über die Triebwelle 9, 10 an das entsprechende Rad des Kraftfahrzeuges beziehungsweise über die Getriebeeingangswelle 5, 6 an die entsprechende zugehörige Reibkupplung angekoppelt.

In dem Beispiel wird zunächst das Schaltelement S3 in die rechte Schaltstellung bewegt, wodurch das Zahnrad 15 als freies Bauteil /Losrad (und funktional wirksam damit ebenfalls das kämmend angeordnete Losrad /Zahnrad 24) mit der Getriebeeingangswelle 6 gekoppelt wird. Das Einlegen erfolgt dabei in besonders bevorzugter Ausgestaltung gesteuert, insbesondere mit Vorgabe von Druck- und Volumenstrom ohne Berücksichtigung der Drehzahl der anzukoppelnden Bauteile.

In einem zweiten Schritt wird durch Betätigung eines weiteren Schaltelements, nämlich des Schaltelements S6 eine Wirkverbindung zwischen dem Rad - hier der Triebwelle 10 - und der zugehörigen Reibkupplung - hier über die Getriebeeingangswelle 6 - hergestellt. In dem zweiten Schritt wird eine Wirkverbindung zwischen der Triebwelle 10 und der Getriebeeingangswelle 6 hergestellt, da diese dem Zielgang zugeordnet sind. Die Wirkverbindung erstreckt sich nach Betätigen des Schaltelements S3 von der äußeren, zweiten Getriebeeingangswelle 6 über die beiden Zahnräder 15, 24, die Hohlwelle 28 auf die Triebwelle 10. Die bei diesem zweiten Schritt dabei anfangs auftretende Drehzahldifferenz am Schaltelement S6 wird vorzugsweise durch Drehzahlanpassung mittels des Schaltelements S6 geregelt und insbesondere im Wesentlichen auf null synchronisiert. Dies entspricht einer Soll-Gradientenregelung in Synchronpunkt.

Das Gangeinlegen mit drei oder mehr Schaltelementen S1 bis S6 kann insbesondere im ersten Schritt auch teilweise zeitlich parallel erfolgen, wodurch Zeit während des Schaltvorgang gespart werden kann. Wenn beispielsweise nach dem Gangauslegen die Schaltelemente S3, S4 und S6 alle in der Neutralstellung angeordnet sind, so können zunächst in bevorzugter Ausgestaltung im ersten Schritt nun zunächst alle lastfreien Bauteile an das Rad beziehungsweise die Triebwelle 9, 10 und/oder die zugehörige Reibkupplung angekoppelt werden, die nicht miteinander in Verbindung stehen. Wenn nun der dritte Gang als Zielgang ausgewählt ist, so werden zunächst die Schaltelemente S3 und S4 zeitgleich in die Stellung "rechts" bewegt. Das Schaltelement S4 verbindet die Hohlwelle 28 als freies Bauteil dabei mit der Triebwelle 10. Das Schaltelement S3 verbindet funktional wirksam die beiden Zahnräder 15, 24 mit der äußeren Getriebeeingangswelle 6. Die Zahnräder 15, 24 und die Hohlwelle 28 sind noch nicht durch einen Leistungsfluss verbunden, da das Schaltelement S6 zunächst noch in der Neutralstellung angeordnet ist und den Leistungsfluss trennt. Dieses parallele Gangeinlegen erfolgt in besonders bevorzugter Ausgestaltung in gesteuerter Art und Weise. Durch das parallele Gangeinlegen im ersten Schritt wird der Schaltvorgang zeitlich optimiert.

Es wird vorgeschlagen, mit der dann abschließenden Schaltelementbewegung des Schaltelements S6 im zweiten Schritt beziehungsweise bei der abschließenden Betätigung des entsprechenden Schaltelementes S6 die kraftschlüssige Verbindung zwischen der dem Zielgang zugeordneten Triebwelle 10 und der dazugehörigen Reibkupplung bzw. der Getriebeeingangswelle 6 geregelt herzustellen.

## Patentansprüche

1. Verfahren zur Schaltung eines Kraftfahrzeuggetriebes (1,2), wobei ein Zielgang eingelegt wird, wobei beim Einlegen des Zielganges mehrere Schaltelemente (S1 bis S6) des Kraftfahrzeuggetriebes (1, 2) betätigt werden, wobei die Schaltelemente mit entsprechenden Lösrädern oder Loswellen zusammenwirken,
**dadurch gekennzeichnet, dass**
in einem ersten Schritt mindestens ein lastfreies Bauteil des Kraftfahrzeuggetriebes (1, 2), nämlich ein bislang nicht in einem Leistungsfluss eingebundenes Losrad oder eine bislang nicht in einem Leistungsfluss eingebundene Loswelle des Kraftfahrzeuggetriebes (1, 2), das/die dem Zielgang zugeordnet ist,
über das mindestens eines der dem Losrad bzw. der Loswelle zugehörige Schaltelemente (S1 bis S6) mit einer Getriebeeingangswelle (5,6) des Kraftfahrzeuggetriebes (1, 2) oder einer Triebwelle (9,10) des Kraftfahrzeuggetriebes (1, 2) gekoppelt wird,
und in einem zweiten Schritt ein verbleibendes Schaltelement (S1 bis S6) eingelegt wird, um eine Verbindung zwischen der Getriebeeingangswelle (5,6) und der Triebwelle (9,10) bereitzustellen, und wobei beim zweiten Schritt die dabei auftretende Drehzahldifferenz mittels des verbleibenden Schaltelements (S1 bis S6) geregelt wird.

2. Verfahren nach Anspruch 1, **dadurch gekennzeichnet, dass** ein Ist-Gang ausgelegt wird, wobei beim Auslegen mehrere Schaltelemente (S1 bis S6) betätigt werden, wobei beim Auslegen mehrere der Schaltelemente (S1 bis S6) zumindest teilweise gleichzeitig betätigt werden.

3. Verfahren nach Anspruch 1 oder 2,
**dadurch gekennzeichnet, dass**
das beim ersten Schritt betätigte Schaltelement (S1 bis S6) gesteuert wird oder die beim ersten Schritt betätigte Schaltelemente (S1 bis S6) gesteuert werden.

4. Verfahren nach einem der vorstehenden Ansprüche 1 bis 3,
**dadurch gekennzeichnet, dass**
beim zweiten Schritt eine Soll-Gradientenregelung im Synchronpunkt mittels eines dem Zielgang zugeordneten Schaltelements (S1 bis S6) erfolgt.

5. Verfahren nach einem der vorstehenden Ansprüche 1 bis 4,
**dadurch gekennzeichnet, dass**,
wenn dem Zielgang drei oder mehr Schaltelemente (S1 bis S6) zugeordnet sind, im ersten Schritt ein zeitgleiches Einlegen derjenigen Schaltelemente (S1 bis S6) erfolgt, deren zugehörigen lastfreie Bauteile nicht über eine Wirkverbindung miteinander verbunden sind.

6. Verfahren nach einem der vorstehenden Ansprüche, **dadurch gekennzeichnet, dass** Verfahren auf ein Kraftfahrzeuggetriebe (2) in Form eines Doppelkupplungsgetriebes (1) mit zwei Getriebeeingangswellen (5, 6) und mit zwei Triebwellen (9, 10) angewendet wird.

7. Verfahren nach Anspruch 6,
**dadurch gekennzeichnet, dass** mittels des Doppelkupplungsgetriebes (1) mehrere Vorwärtsgänge schaltbar sind, wobei mindestens einer der Vorwärtsgänge durch einen Windungsgang realisiert wird.

## Claims

1. A method for shifting gears in a motor vehicle transmission (1, 2), in which a target gear is engaged, wherein multiple shifting elements (S1 to S6) of the motor vehicle transmission (1, 2) are actuated when the target gear is engaged, wherein the shifting elements interact with corresponding idler wheels or idler shafts,
**characterized in that**
in a first step, at least one load-free component of the motor vehicle transmission (1, 2), namely an idler wheel or an idler shaft of the motor vehicle transmission (1, 2), which idler wheel or idler shaft was not previously integrated into a power flow and is associated with the target gear,
is coupled, via the at least one of the shifting elements (S1 to S6) associated with the idler wheel or the idler shaft, to a transmission input shaft (5, 6) of the motor vehicle transmission (1, 2) or to a drive shaft (9, 10) of the motor vehicle transmission (1, 2),
and, in a second step, a remaining shifting element (S1 to S6) is engaged in order to provide a connection between the transmission input shaft (5, 6) and the drive shaft (9, 10), and wherein the rotation speed difference thereby occurring in the second step is regulated by means of the remaining shifting element (S1 to S6).

2. The method according to claim 1, **characterized in that** a current gear is disengaged, wherein multiple shifting elements (S1 to S6) are actuated upon disengagement, wherein several of the shifting elements (S1 to S6) are at least partially simultaneously actuated upon disengagement.

3. The method according to claim 1 or 2,
**characterized in that**
the shifting element (S1 to S6) actuated in the first step is controlled, or the shifting elements (S1 to S6) actuated in the first step are controlled.

4. The method according to any one of the preceding claims 1 to 3,
**characterized in that**
in the second step, a desired gradient regulation takes place at the synchronization point by means of a shifting element (S1 to S6) associated with the target gear.

5. The method according to any one of the preceding claims 1 to 4,
**characterized in that,**
if three or more shifting elements (S1 to S6) are associated with the target gear, in the first step a simultaneous engagement takes place of those shifting elements (S1 to S6) whose associated load-free components are not connected to one another via an operative connection.

6. The method according to any one of the preceding claims, **characterized in that** method is applied to a motor vehicle transmission (2) in the form of a double clutch transmission (1) having two transmission input shafts (5, 6) and having two drive shafts (9, 10).

7. The method according to claim 6,
**characterized in that** multiple forward gears can be shifted by means of the double clutch transmission (1), wherein at least one of the forward gears is realized by a winding path gear.

## Revendications

1. Procédé permettant de passer les vitesses de la boîte de vitesses (1, 2) d'un véhicule automobile, une vitesse cible étant engagée, plusieurs éléments de changement de vitesse (S1 à S6) de la boîte de vitesses (1, 2) du véhicule automobile étant actionnés lors de l'engagement de la vitesse cible, les éléments de changement de vitesse coopérant avec des pignons fous ou des arbres fous correspondants,
**caractérisé en ce que,**
dans une première étape, au moins un élément sans charge de la boîte de vitesses (1, 2) du véhicule automobile, à savoir un pignon fou non impliqué jusqu'alors dans un flux de puissance ou un arbre fou non impliqué jusqu'alors dans un flux de puissance de la boîte de vitesses (1, 2) du véhicule automobile, qui est associé à la vitesse cible,
est couplé, par le biais de l'au moins un des éléments de changement de vitesse (S1 à S6) associés au pignon fou ou à l'arbre fou, à un arbre d'entrée de boîte de vitesses (5, 6) de la boîte de vitesses (1, 2) du véhicule automobile ou un arbre moteur (9, 10) de la boîte de vitesses (1, 2) du véhicule automobile,
et dans une seconde étape, un élément de changement de vitesse (S1 à S6) restant est engagé, pour fournir une liaison entre l'arbre d'entrée de boîte de vitesses (5, 6) et l'arbre moteur (9, 10), et, lors de la seconde étape, la différence de régime se produisant alors étant régulée au moyen de l'élément de changement de vitesse (S1 à S6) restant.

2. Procédé selon la revendication 1, **caractérisé en ce qu'**une vitesse réelle est désengagée, plusieurs éléments de changement de vitesse (S1 à S6) étant actionnés lors du désengagement, plusieurs éléments de changement de vitesse (S1 à S6) étant actionnés au moins en partie simultanément lors du désengagement.

3. Procédé selon la revendication 1 ou 2,
**caractérisé en ce que**
l'élément de changement de vitesse (S1 à S6) actionné lors de la première étape est commandé ou les éléments de changement de vitesse (S1 à S6) actionnés lors de la première étape sont commandés.

4. Procédé selon l'une quelconque des revendications 1 à 3,
**caractérisé en ce que,**
lors de la seconde étape, une régulation du gradient de consigne au point de synchronisation est effectuée au moyen d'un élément de changement de vitesse (S1 à S6) associé à la vitesse cible.

5. Procédé selon l'une quelconque des revendications 1 à 4,
**caractérisé en ce que,**
si trois éléments de changement de vitesse (S1 à S6) ou plus sont associés à la vitesse cible, un engagement simultané des éléments de changement de vitesse (S1 à S6) dont les éléments sans charge associés ne sont par reliés les uns aux autres par une liaison fonctionnelle, est effectué dans la première étape.

6. Procédé selon l'une quelconque des revendications précédentes, **caractérisé en ce que** le procédé est appliqué à une boîte de vitesses (2) de véhicule automobile sous la forme d'une boîte de vitesses à double embrayage (1) avec deux arbres d'entrée de boîte de vitesses (5, 6) et avec deux arbres moteurs (9, 10).

7. Procédé selon la revendication 6,
**caractérisé en ce que** plusieurs vitesses de marche avant peuvent être passées au moyen de la boîte de vitesses à double embrayage (1), au moins une des vitesses de marche avant étant réalisée par une vitesse utilisant plusieurs niveaux de roues d'engrenage.
